Europäisches Patentamt

European Patent Office

Office européen des brevets

(11) Publication number: **0 175 804**
**A1**

(12) **EUROPEAN PATENT APPLICATION**

(21) Application number: **84111459.8**

(22) Date of filing: **26.09.84**

(51) Int. Cl.⁴: **B 01 D 53/04**
**C 01 B 13/02**

(43) Date of publication of application:
**02.04.86 Bulletin 86/14**

(84) Designated Contracting States:
**AT BE CH DE FR GB IT LI LU NL SE**

(71) Applicant: **UNION CARBIDE CORPORATION**
**39 Old Ridgebury Road**
**Danbury Connecticut 06817(US)**

(72) Inventor: **Dangieri, Thomas Joseph**
**8 General MacArthur Dr.**
**Carmel 10512, N.Y.(US)**

(72) Inventor: **Cassidy, Robert Thomas**
**6 Malcolm St.**
**Waldwick 07463,N.J.(US)**

(74) Representative: **Schwan, Gerhard, Dipl.-Ing.**
**Elfenstrasse 32**
**D-8000 München 83(DE)**

(54) **Enhanced performance in rapid pressure swing adsorption processing.**

(57) In the rapid pressure swing adsorption process, the feed gas mixture is passed to one or more adsorbent beds configured so that the cross sectional area is reduced from the inlet to the discharge end thereof. The processing sequence comprises feed, exhaust and repressurization steps, with the exhaust step time of less than twice the feed step time, being feasible in single systems, while desirable multi-bed embodiments can advantageously be carried out at exhaust/feed ratios in excess of about 2:1. The process is advantageous for use in the separation of air, as in the production of high purity oxygen or nitrogen.

EP 0 175 804 A1

## ENHANCED PERFORMANCE IN RAPID
## PRESSURE SWING ADSORPTION PROCESSING

## Background of the Invention

### Field of the Invention

The invention relates to the use of pressure swing adsorption for the separation of gases. More particularly, it relates to an improved rapid pressure swing adsorption process for the recovery of oxygen and other gases from feed gas mixtures.

### Description of the Prior Art

The rapid pressure swing adsorption process has been developed in order to extend the advantages of the well-known pressure swing adsorption technology to applications such as the production of breathing oxygen from air. Such oxygen is used by persons suffering from respiratory ailments and for a variety of other applications, e.g. for high altitude breathing in aircraft. The rapid pressure swing adsorption, i.e. RPSA, process overcomes the disadvantages inherent in conventional pressure swing adsorption techniques as applied to such applications, namely low adsorbent productivity in supplying breathing oxygen to an individual user or in supplying other desired product gases for particular uses.

The RPSA process was described with respect to various aspects thereof in the Earls et al. patent, U.S. 4,194,891, and in the Jones et al. patent, U.S. 4,194,892. The process involves a

D-13,918

cyclic process of feed and adsorption at higher pressure, exhaust and repressurization carried out on a very rapid basis, in less than about 30 seconds, in a manner not feasible in the conventional PSA processing cycles used to produce oxygen, hydrogen or other gases on a large size commercial scale. Desirable features of the RPSA process are the compactness and light weight of the systems used to carry out the process, these features pertaining without sacrifice in oxygen or other product gas enrichment or in the generally high productivity obtainable by the RPSA process and system.

While the RPSA process thus represents a significant development in the field of pressure swing adsorption, there is a desire in the art for further improvements therein to more fully meet the technical and economic requirements of various applications for which the RPSA process and system has been found particularly suited. As an example, the business of supplying quantities of enriched oxygen or nitrogen to low volume users has been rapidly expanding over the past decade. The providing of on-site adsorption separation units for the production of enriched gas product is an economically attractive alternative to the use of liquid or cylinder gas supply means. At the present time, users requiring less than one ton per day of oxygen delivered at purities of between 90% and 95% are favorably inclined to employ adsorption separation systems, provided that such major considerations as low weight and size can be satisfied so that portable, reliable systems capable of providing a constant supply of gas at a specified purity can be supplied. The RPSA process and system is well suited to fulfill these requirements in the field of oxygen enrichment and for other applications. RPSA systems are thus capable of delivering a relatively large amount of oxygen as usable product as compared which the amount of adsorbent employed. As a result, RPSA systems containing smaller, lighter and fewer adsorption vessels are capable of delivering the same amount of product gas as in a greater number of larger, heavier adsorption vessels processed in accordance with conventional pressure swing adsorption techniques not based on the RPSA concept. RPSA systems also employ fewer process control valves and the like, as compared with conventional PSA systems, and they are capable of delivering enriched product gas at a purity fluctuation of $\pm$ 1% oxygen.

While the RPSA approach will thus be seen to have outstanding advantages in fulfilling a significant marketing need, RPSA process and system is not without certain areas in which improvement is desired. One such area relates to the relatively low efficiency achieved for the separation of oxygen for feed air. As a result, a relatively large amount of feed air must be processed to deliver a given amount of product gas. Because of the compression requirements of the feed air, relatively high power consumption is experienced in the operation of RPSA systems.

D-13,918

When RPSA systems are operated to obtain the maximum oxygen enrichment obtainable in such systems, e.g. 95%, this upper requirement is found to severely decrease the performance achieved in the practice of the RPSA process, with the recovery of oxygen from air and the production of oxygen per pound of adsorbent in the system being relatively low. These undesirable characteristics result from the need to prohibit the breakthrough of the undesired component, nitrogen in the case of oxygen production by air separation, from the adsorbent bed into the downstream product manifold. One approach for improving this circumstance might be to lengthen the adsorbent bed so as to better contain the impurities therein. This approach would, however, run counter to the general desire to limit the size and weight of RPSA systems, particularly for significant applications such as home oxygen concentrators where such factors are important to the general utility of the system.

It should be noted that the Jones et al. patent, U.S. 4,194,892, disclosed the use of a single adsorbent bed under operating conditions such that the exhaust period was at least twice the feed gas period. The patent also made reference to an adsorbent bed that was reduced in cross sectional area in three distinct sections of different diameters. This reduced the inventory of adsorbent used so that productivity was increased at a constant oxygen production rate. In addition, fewer moles of feed gas were needed to achieve a desired pressure level in the bed. Such results were

D-13,918

obtained using an adsorbent bed having a reduction in cross sectional area from the inlet to the discharge end by a ratio of 9/1. The best performance accomplished was at 30 psig and 92% oxygen purity, with recovery being 19% of the oxygen in the feed gas and productivity being 0.11 lbs. of oxygen/lb. of molecular sieve adsorbent-hr.

Improvements in the RPSA process of Jones et al. were described in the Earls et al. patent, U.S. 4,194,891, which related to the use of two or three adsorbent beds. In this multi-bed embodiment of the RPSA process, the exhaust/feed ratio was desirably reduced to at least 0.5 but less than 2, as compared with the exhaust/feed ratio of at least 2/1 required in the Jones et al. single bed embodiment. With the improvements provided by Earls et al., the performance of the RPSA process was improved dramatically, enabling the process to become advantageous for use in the production of breathable oxygen for medical purposes. Oxygen concentrators were thus able to exhibit desirable advantages, such as a short elapsed time between start-up and the delivery of product at a desired purity, less fluctuation in product pressure, higher purity, elimination of product purge volume, and improved productivity, all of which translated into shorter, smaller vessels, less adsorbent inventory and better recovery of oxygen from the feed, thus reducing the power consumption of the overall process. Oxygen recoveries under similar processing conditions to those employed in the single bed embodiment rose to 25% at 90% oxygen purity, at a

D-13,918

productivity of 0.58 lbs. of oxygen/lb. of adsorbent per hour.

Despite the course of development of the RPSA process as represented by such evolution from a one-bed system to a two- or three-bed system, those skilled in the art will appreciate that further improvements in the overall performance of the RPSA process are highly desirable in the art. For the home medical oxygen concentrator application, for example, further reduction in size, weight and power consumption would be of great significance, particularly with respect to the portability and practicality of the use of such a concentrator at various locations, up and down stairs, throughout the confines of a home. For such an application and for other medical or industrial applications, the ability to effectively utilize single bed systems, while achieving enhanced performance comparable to that of multi-bed systems, or preferably superior thereto, would represent a further significant advance in the development of the RPSA technology. A single adsorbent bed system would thus enable simpler manufacturing operations to be practiced and would result in desirable cost reductions for the RPSA systems.

It is an object of the invention, therefor, to provide an improved RPSA process for the separation of gas mixtures.

It is another object of the invention to provide an RPSA process having enhanced adsorbent productivity.

D-13,918

It is another object of the invention to provide a RPSA process enabling improved product recovery to be achieved without the sacrifice of lowering product enrichment.

It is another object of the invention to provide an RPSA process capable of achieving advantageous overall performance in a single bed system.

It is another object of the invention to provide an improved RPSA process capable of reducing power consumption and adsorbent inventory requirements.

It is a further object of the invention to provide an RPSA process for enhancing the separation of oxygen and/or nitrogen from air.

It is a further object of the invention to provide an RPSA process capable of extending the advantages achievable in a single bed system to multi-bed systems.

With these and other objects in mind, the invention is hereinafter described in detail, the novel features thereof being particularly pointed out in the appended claims.

## Summary of the Invention

The RPSA process is carried out using a desired exhaust/feed ratio, with the feed gas mixture being passed to a single adsorbent bed, or to a multi-bed system, wherein the bed or each of them, is configured such that a particular reduction in cross sectional area is achieved from the feed end to the discharge end thereof. Exhaust to feed ratios within the range of from about 0.4/1 to about 1.8/1 are desirably employed in the practice of single bed embodiments of the invention achieving performance exceeding that heretofore obtainable only by the use of two or three bed systems.

Detailed Description of the Invention

The objects of the invention are accomplished by employing desired exhaust/feed ratios, such as those obtainable previously only in multi-bed RPSA systems, in conjunction with a bed configuration including a specific reduction in the cross sectional area of the adsorbent bed or beds used to selectively adsorb one or more components from a feed gas mixture. Enhanced adsorbent productivity can thereby be achieved, as can enhanced product recovery without sacrifice in desired product enrichment. In addition, desirable reductions in power consumption can be achieved, and the adsorbent inventory requirements of the RPSA process can be significantly reduced.

The RPSA process, and the embodiments thereof falling within the scope of the invention, can advantageously be employed for the selective adsorption of at least one or more readily adsorbable gas components from a feed gas mixture of said component with at least one less readily adsorbable component. In the process, each adsorbent bed in the RPSA system undergoes, on a cyclic basis, a processing sequence that includes (1) feeding the gas mixture to the feed end of the bed for selective adsorption of the more readily adsorbable gas component of the mixture at high adsorption pressure, with withdrawal of the less

0175804

readily adsorbable gas component as product effluent from the opposite or discharge end of the bed, (2) countercurrently depressurizing the bed, with the more readily adsorbable gas component thereby being exhausted from the feed end of the bed, and (3) repressurizing the bed from the lower pressure reached during countercurrent depressurization to a higher intermediate pressure or to the high final adsorption pressure for the adsorption of the more readily adsorbable component from additional quantities of the feed gas mixture during the next processing cycle in the bed. As will be further described below, the RPSA cyclic processing sequence that includes such high pressure feed-adsorption, exhaust and repressurization steps may also include a delay period to further enhance the overall process.

In the practice of the invention, the RPSA process can advantageously be carried out using a single adsorbent bed, although the use of multi-bed systems is also within the scope of the invention. Contrary to the requirements of the single-bed Jones et al. patent referred to above, i.e. U.S. 4,194,892, the RPSA process, as described above and in the modifications referred to below, may be carried out employing an advantageous exhaust step time of less than twice the feed step time. In certain preferred embodiments of the invention the exhaust/feed ratio will be in the range of from about 0.4/1 to about 1.8/1, more preferably in some applications from about 1/1 to about 1.75/1. Those skilled in the art will appreciate that the

D-13,918

particular exhaust/feed ratio employed in any particular application will depend upon a variety of factors, including the gas separation to be accomplished, the product enrichment and recovery requirements pertaining thereto, the adsorbent employed, the productivity requirements and the like. In general, it has been observed that somewhat lower exhaust/feed ratios can often be employed for some multi-bed applications than when a single adsorbent bed is employed. Significantly, however, the exhaust/feed ratios employed can, in any event, be made desirably lower than were required in the single bed process disclosed in the Jones et al. patent. As a result of the ability to use such advantageous exhaust/feed ratios in conjunction with the bed configurations herein disclosed, the results for both the single bed embodiment of the invention and for multi-bed embodiments are significantly improved over the results previously obtainable only by the use of the multi-bed RPSA process of the above-identified Earls et al. patent.

For the purposes of the invention, it has been found that highly desirable enhancement in RPSA performance is achieved at desired exhaust/feed ratios referred to above with the feed gas mixture being passed to an adsorbent bed, or series of beds, configured so as to achieve a particular reduction in cross sectional area between the feed end at which the feed gas mixture is introduced to the bed and the discharge end thereof at which product effluent is discharged from the bed. More particularly, the ratio of the cross sectional area at the feed end of each bed to that at the discharge end thereof should be within the range of from about 2/1 to about 20/1, particularly from about 3/1 to about 6/1. Particularly desirable results have been achieved in embodiments of the invention carried out at an area reduction on the order of about 4/1. It should be noted that the reduction in cross sectional area is not dependent on a particular bed length relationship so as to define a particular angle of bed taper. Thus, various bed lengths may be employed depending on the amount of adsorbent required for a given separation provided that the indicated reduction in cross sectional area is achieved. It should be noted, however, that the bed length may be related to the exhaust feed ratio, the particular area reduction and to the overall total cycle time to define particularly advantageous embodiments of the invention as is referred to below. It is particularly pointed out that the concept of designing adsorption vessels into various shapes is not, of itself, new in the art. Thus, West German patent No. 2,901,938, issued February 8, 1979, refers to the use of a tapered bed arrangement used to achieve uniform gas flow and constant temperature along the adsorption zone. The patent did not, however, disclose or suggest the significant improvement in process performance obtainable by the combination of particular features disclosed and claimed herein. As noted in the background discussion above, the Jones et al. patent disclosed, with respect to single bed RPSA systems,

the use of three bed sections decreasing in cross sectional area from the feed to the discharge end of the bed to increase the utilization of the adsorbent, and thus to increase productivity. Jones et al. also indicates that the bed taper can be achieved by continuously reducing the cross sectional area of the bed rather than by reducing it in discrete steps. It is likewise within the scope of the invention to similarly achieve the desired reduction in cross sectional area from the feed to the discharge end of the bed in either discrete steps or by means of a continuous taper. By employing the specific cross sectional area reduction herein specified in conjunction with advantageous exhaust/feed ratios and other operating conditions herein disclosed and claimed, major reductions in power consumption and required adsorbent inventory can be achieved while also obtaining product purity and/or recovery levels and productivity not obtainable in the practice of the single bed RPSA process of Jones et al.

In addition to the high pressure feed-adsorption, exhaust and repressurization steps referred to above, it has been indicated that the process of the invention can employ a delay period as part of the overall RPSA processing sequence. Thus, the processing cycle may comprise, in sequence a single bed or in each bed of a multi-bed system, the steps of feed, delay, exhaust and repressurization. It will be appreciated that the terms "feed" step or "high pressure feed-adsorption", or the like are used to denote that period of time during which a pressurized feed gas mixture is introduced to the feed end of an adsorbent bed at the high adsorption pressure of a given application. The term "exhaust" and the like denotes that period of time, or portion of the overall cycle, when gas at a lower pressure than the high feed-adsorption pressure is caused to leave the bed at said feed end thereof, i.e., in a countercurrent depressurization step. While such countercurrent depressurization will inherently be to a lower pressure than the adsorption pressure, those skilled in the art will appreciate that it is generally desirable to depressurize the bed to as low a pressure as possible so that the more readily adsorbable gas component will be desorbed and swept from the bed to the fullest practical extent during the countercurrent depressurization step. Accordingly, the countercurrent depressurization or exhaust step will commonly be continued until atmospheric or sub-atmospheric pressures are reached at the feed end of the bed, the latter necessarily involving a vacuum cycle. Those skilled in the art will appreciate that the whole bed will not be depressurized to such low pressures during each cycle. To the contrary, only about 1/3 of the bed at the feed end thereof may actually be depressurized fully to the lower desorption pressure level. The delay period in the indicated processing sequence is a period of time during which no feed gas mixture is being fed to the bed and no gas is being exhausted from the bed by countercurrent depressurization during the delay period. During

D-13,918

this period, the gas pressure in the bed will decrease from the adsorption pressure level as gas present in the bed travels therethrough to the discharge end thereof and passes from this end of the bed during the delay period.

In addition, the invention can be practiced in a feed, exhaust and delay sequence in which said delay period constitutes the repressurization step of the overall cycle. In this embodiment, the delay period again occurs with no passage of gas to the feed end of the bed and with no exhaust from the feed end of the bed by countercurrent depressurization during the delay period. The pressure within the bed increases during this delay period as product quality gas passes from the downstream product manifold into the discharge end of the lower pressure bed during this delay period following the exhaust step. The delay step thus constitutes a partial countercurrent repressurization of the bed to a higher intermediate pressure. Upon commencing of the feeding of the feed gas mixture to the bed at high adsorption pressure, the bed will be found to very rapidly increase to said high adsorption pressure from said intermediate pressure so that a separate repressurization step, in addition to said delay period, becomes unnecessary. In another embodiment of the invention, the processing sequence may comprise a feed, delay, exhaust and further delay cycle. In this case, each delay period functions as described above with respect to embodiments employing only a single delay period, after either the feed step or after the exhaust step.

As indicated above, the invention may be practiced in a single bed RPSA system or in systems having at least two adsorbent beds, with from two to ten adsorbent beds, more commonly with from two to five adsorbent beds generally being employed. In many practical commercial applications, it will be understood that two bed, three bed or four bed systems will be particularly advantageous. Those skilled in the art will also appreciate that, when four or five or more beds are employed in an adsorption system, it is generally desirable to arrange the system so that the feed gas mixture can be passed to at least two adsorbent beds at any particular time, typically in overlapping sequence. In such systems, of course, each bed undergoes the particular processing sequence being employed, on a cyclic basis, as continuous operations continue in the system.

The practice of the invention is particularly advantageous at adsorption pressures above about 20 psig, although the invention can also be employed at the lower pressure levels to which the RPSA process has successfully been applied. The invention is preferably applied at adsorption pressures of from about 25 to about 60 psig, although pressures above this range may also be employed.

While the invention can be practiced with respect to its various embodiments within the time limitations heretofore applicable to RPSA systems,

D-13,918

e.g. up to about 30 seconds, the total operating or cycle time for each processing cycle is preferably on the order of from about 2 to about 10 seconds for oxygen recovery by air separation. Similarly, the feed step at adsorption pressure can vary widely within such overall limits, provided that the exhaust step is less than twice the time of the high pressure feed-adsorption step as was discussed above. A feed step at high pressure consuming from about 0.2 to about 0.8 seconds has been found particularly convenient for certain practical low volume commercial applications.

The advantages obtained in the practice of the invention may be further appreciated by a consideration of the following pertinent factors contributing to the improved results obtainable thereby. In any RPSA process wherein the flow of gas from the downstream product manifold into the adsorbent bed countercurrent to the direction of feed gas flow is not physically restricted, as by an orifice, valve, etc., the creation of a pressure differential across the adsorbent bed is essential for the effective separation of gas components. This is accomplished by operating the cycle at a very rapid rate and by the use of small particle size adsorbent material. As feed gas enters the adsorbent bed, both the restricted flow path and the fact that selective adsorption decreases the number of gas molecules traveling through the bed contribute to the reduction in molar velocity in the bed. By the restricting of these molecules into smaller and smaller cross sectional areas, this undesirable effect is overcome, and the molar gas velocity required for suitable RPSA performance is maintained. It has been found, in the practice of the invention, that the combination of particular bed configurations including cross sectional area reduction, coupled with the desirable exhaust/feed ratios employed, enables outstanding RPSA performance to be achieved even when only a single adsorbent bed is employed.

Those skilled in the art will appreciate that the rapid pressure swing adsorption process of the invention does not take full advantage of the equilibrium loading of the more readily adsorbable component because of the rapid sequence of processing steps being repeated on a fast cyclic basis. If the rate of diffusion of the more readily adsorbable component, e.g. nitrogen in air separation for oxygen recovery, into and out of the cage structure of the individual adsorbent particles could be enhanced, however, the dependence of the separation process on such equilibrium loading would be reduced. Improved film diffusion at the adsorbent particle level is achieved in the practice of the invention. The overall effect of an improved film diffusion rate, coupled with the maintaining of the molar gas velocity with the adsorbent vessel as discussed above, is to cause a sharpening of the mass transfer front within the adsorbent bed. The film diffusion rate is increased by the rapid displacement of the molecules of the less readily adsorbable component(s) of a gas mixture by the more readily adsorbable component(s) thereof. Higher molar flux ratios promote this exchange, replenishing the partial pressure of the more readily adsorbable component around each adsorbent particle. Evidence of such a sharpened mass transfer zone resides in the much improved process performance achieved at maximum oxygen product purity, where nitrogen is prohibited from leaving the adsorbent bed. Furthermore, the improvement in performance is found to decrease as the desired oxygen enrichment is decreased from 94.5% down to 90% or below.

The reduction in cross sectional area of the adsorbent beds employed in the practice of the invention will be understood to result in less storage of product quality gas in the void spaces of the adsorbent bed. Thus, the available volume in which adsorbent is contained is reduced near the product or discharge end of each bed. Typically, gas of or near product quality resides in the intra-particle void spaces. This gas may be released from one bed and used to provide purge gas to other beds in the system during the regeneration portion of the cycle and may also be used to provide product storage gas. As the RPSA process in general, and as carried out in the practice of the invention, typically has no control valve in the downstream product manifold to which the adsorbent bed or beds are connected, excess purge gas beyond that actually needed for purge purposes may be lost in the waste discharge from the system. This, of course, represents an undesired overall loss in product recovery. In experimental runs employing a three

D-13,918

adsorbent bed system, the addition of a product surge vessel was found to result in an improvement in performance at lower feed pressures. This indicated that the bed volume reduction at the product end of the system had reached a significant point at which the amount of gas stored in the void spaces of the beds alone may not have been sufficient to supply both an efficient amount of purge gas during bed regeneration and the needs for product withdrawal from the system.

The advantages obtainable in the practice of the invention were illustrated in experimental runs obtained with single bed and multi-bed systems adapted for operation in accordance with the RPSA cycle. Both systems were adapted to operate at various inlet feed pressures, cycle times, step intervals and product withdrawal rates. Solenoid actuated diaphragm valves were employed although rotary or other types of valves could have been employed. Conventional 13 X molecular sieve adsorbent was employed in light of its proven advantageous adsorption characteristics when employed in air separation for the recovery of product oxygen. The particle size distribution of the adsorbent by weight was 60-80% -40+60 and 20-40% -60+80 U.S. Standard screen size. Two cycle time embodiments of the invention were employed, one continuous and one discontinuous with respect to the delivery of feed gas to the multiple bed adsorption system. Various systems as referred to below were employed, with the only apparatus variable being the geometry of the adsorbent beds and the amount of

0175804

adsorbent contained within a prescribed bed length for such systems as employed for comparative tests.

Three adsorbent bed designs were thus employed in a vertical orientation to demonstrate the practical utility and benefits achievable in the practice of the invention. All three beds employed a common containment device commonly used in RPSA processing. It consisted of a sintered metal plate porous enough to all the free movement of gas in and out of each bed, yet solid enough to restrict movement of the adsorbent particles. A coiled spring was situated above the plate to maintain the position of the plate against the adsorbent particles so as to compensate for any settlement of the adsorbent particles during the cyclic RPSA operation. Vessel I consisted of a totally cylindrical inner volume having a constant 2" inside diameter. Adsorbent was placed in this vessel to a measured height of 12 inches ± 0.25 inches. Vessel II was assembled in two sections flanged together. The first section located at the feed/exhaust end of the vessel, was primarily intended to accommodate containment and spring devices. It measured 2" inner diameter, and allowed adsorbent particles to occupy a depth of 1.75 inches of the total bed height of 12 inches ± 0.25 inches employed in the vessel. The remaining 10.25 inches of the vessel contained a smooth, tapered, gas tight insert having a total taper angle of 5°36' and a degree of taper of 0.09752" per inch tapered bed. This resulted in a cross sectional area reduction ratio from the feed end of the bed to the discharge end thereof of 4/1.

D-13,918

Vessel III, conformed to all of the dimensions of Vessel II except for the degree of taper, the angle of the taper being increased to 8°22' that, in turn, increased the degree of taper to 0.14628" per inch. The cross section area reduction ratio from the feed to the discharge end was thus increased to a factor of 16/1.

## Example 1

Experimental runs were carried out in a single bed system, with identical processing conditions being used with each of the three vessel configurations referred to above, i.e., the inlet pressure, cycle time and the overall experimental apparatus employed were the same for each run apart from the noted variations in the adsorbent vessels. The total cycle time for each RPSA processing cycle was 2.7 seconds, with the adsorption step comprising 33% of the total cycle. The exhaust/feed ratio employed was 0.83/1. The process was carried out using air as the feed gas and with oxygen at a purity of 94.5% being the product gas of the system. The comparative results of such runs are shown in TABLE A as follows:

### TABLE A

| Vessel | Feed Pressure psig | % Oxygen Recovery | Oxygen Productivity #$O_2$/#Adsorbent-hr |
|---|---|---|---|
| I | 20 | 8.5 | 0.16 |
| II | 20 | 20.8 | 0.49 |
| III | 20 | 14.2 | 0.34 |
| I | 30 | 2.4 | 0.09 |
| II | 30 | 22.0 | 0.83 |
| III | 30 | 18.8 | 0.66 |

D-13,918

The data of TABLE A clearly demonstrate that significant improvements in oxygen recovery can be achieved, even at the severe oxygen enrichment requirement of 94.5% purity, using the combination of low exhaust/feed ratio and area reduction from the feed to the discharge end of the bed. It will be noted that, consistent with the teachings of the Jones et al patent referred to above, the highly desirable results obtained using Vessels II and III are not obtainable using the cylindrical bed of Vessel I at the very low exhaust/feed ratio of less than 1/1 employed in the comparative runs. Likewise, the results in Vessels II and III demonstrated the significant improvement in the capacity of the system obtainable in the practice of the invention, considered in terms of the pounds of oxygen delivered as product gas per pound of adsorbent in the system per hour, i.e. productivity, at the desired 94.5% oxygen product purity level. These highly desirable results were not obtainable in Vessel I in which the low exhaust/feed ratio employed was not coupled with the area reductions of the bed employed in Vessels II and III. As between the performance achieved in Vessels II and III, it will be noted that the area reduction of 4/1 employed in Vessel II produced the optimum results in the comparative runs. It will be appreciated that the enhanced product recovery and performance obtained under the severe oxygen enrichment requirements of 94.5% purity are likewise obtainable under less severe, high enrichment conditions, as for example in the production of 90% purity oxygen.

Comparative runs under the same operating conditions, but with a product enrichment factor of 90.0% oxygen purity were also run, the results thereof being set forth in TABLE B below:

TABLE B

| Vessel | Feed Pressure psig | % Oxygen Recovery | Oxygen Productivity $\#O_2/\#Adsorbent$-hr |
|--------|--------------------|--------------------|--------------------------------------------|
| I | 20 | 19.2 | 0.24 |
| II | 20 | 22.1 | 0.52 |
| III | 20 | 15.5 | 0.36 |
| I | 30 | 9.5 | 0.25 |
| II | 30 | 25.3 | 0.90 |
| III | 30 | 19.6 | 0.69 |

It will be seen that at such lower oxygen enrichment levels, the benefits of the invention are enhanced at the higher feed pressure level of 30 psig than pertain to 20 psig, with the area reduction of 4/1 from the feed to the discharge end of the bed oxygen providing optimum results over the improved results obtained in the Vessel III embodiment in which a reduction of 16/1 was employed.

Example 2

As the invention can be practiced in multi-bed systems although highly desirable results are obtainable using a single bed system, additional comparative runs were carried out in three bed systems using the same timing cycles as employed in the single bed runs described above. Two three-bed systems were employed, one having vessels constructed to the same specifications as was used

D-13,918

in Vessel I above and the other having the same specifications in Vessel II above. In light of the results shown in TABLES A and B above, the optimum bed configuration of Vessel II only was employed rather than having three bed systems of both Vessel II and Vessel III design constructed. The input feed pressure was extended to 50 psig in the comparative three bed studies. The computed adiabatic power required by a compressor to supply feed air to the system was also determined. A small surge vessel of 1 liter size was included in some of the runs although the use of such a vessel is not required. It will be appreciated that the presence or absence of this vessel did not change the conclusions that can be reached as to an optimum system employing a configured bed in conjunction with the advantageous exhaust/feed ratios of the invention. The results of the comparative three-bed runs were as shown in TABLE C below with respect to a system employing the indicated total cycle time of 2.7 seconds with the adsorption step being 33% of the total cycle time, the exhaust/feed ratio again being about 0.83/1, and the oxygen enrichment factor being to a 94.5% oxygen purity:

TABLE C

| Vessels | Feed Pressure psig | Product Surge Vessel Added | % Oxygen Recovery | Oxygen Productivity #Oxygen/#Adsorbent-hr | Adiabatic Power Required, KW/TPD Oxygen |
|---------|--------------------|----------------------------|-------------------|--------------------------------------------|----------------------------------------|
| I | 20 | No | 15.0 | 0.26 | 24.3 |
| II | 20 | No | 20.9 | 0.50 | 17.5 |
| II | 20 | Yes | 24.6 | 0.58 | 14.8 |
| I | 30 | No | 15.4 | 0.41 | 31.9 |
| II | 30 | No | 23.7 | 0.78 | 20.7 |
| II | 30 | Yes | 26.3 | 0.83 | 18.4 |
| I | 40 | No | 8.7 | 0.30 | 68.8 |
| II | 40 | No | 24.1 | 1.05 | 24.8 |
| II | 40 | Yes | 24.5 | 1.03 | 24.4 |
| I | 50 | No | - | - | - |
| II | 50 | No | 19.2 | 1.03 | 36.1 |
| II | 50 | Yes | 21.8 | 1.12 | 31.8 |

KW/TPD Oxygen will be understood to mean kilowatts per ton per day of product oxygen.

In similar runs under the same operating conditions in the same three-bed systems, but at a product enrichment factor of 90.0% oxygen product purity, the results were as set forth in TABLE D below:

D-13,918

## TABLE D

| Vessels | Feed Pressure psig | Product Surge Vessel Added | % Oxygen Recovery | Oxygen Productivity #Oxygen/#Adsorbent-hr | Adiabatic Power Required, KW/TPD Oxygen |
|---|---|---|---|---|---|
| I | 20 | No | 19.4 | 0.33 | 18.8 |
| II | 20 | No | 22.7 | 0.53 | 16.1 |
| II | 20 | Yes | 24.9 | 0.59 | 14.7 |
| I | 30 | No | 19.2 | 0.50 | 25.6 |
| II | 30 | No | 25.2 | 0.84 | 19.5 |
| II | 30 | Yes | 27.6 | 0.90 | 17.8 |
| I | 40 | No | 14.4 | 0.49 | 41.5 |
| II | 40 | No | 25.8 | 1.14 | 23.2 |
| II | 40 | Yes | 28.6 | 1.20 | 20.9 |
| I | 50 | No | 10.3 | 0.44 | 67.2 |
| II | 50 | No | 23.6 | 1.26 | 29.3 |
| II | 50 | Yes | 26.1 | 1.36 | 28.4 |

The results shown above in TABLES C and D demonstrate that the desirable improvement in oxygen recovery and in adsorbent productivity obtainable in highly advantageous single bed embodiments can also be obtained in multi-bed embodiments of the invention. In addition, the desirably reduced power requirements for operation of the RPSA process also obtainable in the practice of the invention are shown by the results of the comparative results set forth in said TABLES C and D. It will be appreciated that the use of the design of Vessel I, i.e., employing cylindrical beds, corresponds to the operation of the Earls et al patent referred to above in that three beds were employed and the exhaust/feed ratio was less than 2/1. The Vessel I system did not, however, employ such an exhaust/feed ratio in conjunction with the desired bed configuration based on the area reduction of the beds as disclosed and claimed herein.

While the advantageous results indicated above were obtained with single or multi-bed RPSA systems configured as described above and employed at exhaust/feed ratios of less than 2/1, it is also within the scope of the invention to utilize the desirable bed configurations to achieve improved performance at exhaust/feed ratios in excess of about 2/1, i.e. up to 2.2/1 or higher with the limits of practical RPSA cycles. It will be appreciated that such conditions may be useful or particularly desirable for certain RPSA applications. In some aircraft breathing applications, for example, it has been found

D-13,918

desirable to employ RPSA systems based on processing cycles having an exhaust/feed ratio of about 2.25/1. The illustrative runs of Example 3 below are based upon systems having this ratio as representative of this aspect of the invention.

## Example 3

Experimental runs were carried out in a single bed system, with identical processing conditions being used with each of the three adsorbent vessels referred to in Example 1 above. The inlet pressure, cycle time and overall experimental apparatus employed were the same for each run apart from the variations in the adsorbent vessels noted above. The total cycle time for each RPSA processing cycle was 2.4 seconds, with the adsorption step comprising 16.7% of the total cycle time. As indicated above, the exhaust/feed ratio was about 2.25/1. The process was carried out using air as the feed gas and with enriched oxygen at a purity of 94.5% being the product gas of the system. The comparative results of such runs are shown in TABLE E as follows:

### TABLE E

| Vessel | Feed Pressure psig | % Oxygen Recovery | Oxygen Productivity #O$_2$/#Adsorbent-hr |
|--------|--------------------|-------------------|------------------------------------------|
| I      | 20                 | 14.7              | 0.49                                     |
| II     | 20                 | 24.5              | 0.52                                     |
| III    | 20                 | 14.1              | 0.34                                     |
| I      | 30                 | 13.0              | 0.29                                     |
| II     | 30                 | 25.2              | 0.84                                     |
| III    | 30                 | 20.2              | 0.69                                     |

D-13,918

The results set forth in the data of TABLE E clearly indicate that improved performance can be achieved in single bed RPSA systems, even at an oxygen enrichment requirement of 94.5%, using processing cycles having an exhaust/feed ratio in excess of 2/1. It should be noted that the results using Vessel III, having an area reduction of 16/1, were appreciably improved upon operation at 30 psig over the results obtainable at 20 psig under the severe oxygen enrichment requirements of the runs in question. When the same vessels were employed under the same conditions but to achieve a lower oxygen enrichment of 90%, similar results were obtained, with oxygen recovery and adsorbent productivity increasing appreciably at 30 psig over the results obtained at 20 psig, with the performance of Vessel III being superior to that of Vessel I with respect both to recovery and to productivity.

## Example 4

Additional comparative runs were carried out using the same two three-bed systems referred to in Example 2 above, operated under the same operating conditions as pertained in the runs of Example 3 above. Thus, an exhaust/feed ratio of 2.25/1 was employed. The input feed pressure was again extended to 50 psig in the comparative three bed studies, it being understood that higher pressure operations can also be carried out in single bed embodiments of the invention. Again as in Example 2, a small surge vessel of 1 liter size was included in some of the runs as an optional feature. The results of such comparative three-bed

D-13,918

runs were as set forth in TABLE F below, said runs
being carried out to achieve a desired oxygen
enrichment factor of 94.5% oxygen purity:

## TABLE F

| Vessels | Feed Pressure psig | Product Surge Vessel Added | % Oxygen Recovery | Oxygen Productivity #Oxygen/#Adsorbent-hr | Adiabatic Power Required, KW/TPD Oxygen |
|---------|-------------------|---------------------------|-------------------|-------------------------------------------|----------------------------------------|
| I | 20 | No | 12.0 | 0.19 | 30.4 |
| II | 20 | No | 23.1 | 0.51 | 15.8 |
| III | 20 | Yes | 23.7 | 0.52 | 15.4 |
| I | 30 | No | 19.9 | 0.46 | 24.7 |
| II | 30 | No | 27.0 | 0.84 | 18.2 |
| III | 30 | Yes | 28.7 | 0.88 | 17.1 |
| I | 40 | No | 19.7 | 0.61 | 30.4 |
| II | 40 | No | 27.0 | 1.10 | 22.2 |
| III | 40 | Yes | 30.4 | 1.21 | 19.7 |
| I | 50 | No | 12.8 | 0.51 | 54.1 |
| II | 50 | No | 28.3 | 1.37 | 24.5 |
| III | 50 | Yes | 28.5 | 1.34 | 24.3 |

The results shown above in Table F demonstrate that highly desirable improvements in oxygen recovery and in adsorbent productivity can be achieved in multi-bed systems in the practice of the invention, even though the exhaust/feed ratio was about 2.25/1 as contrasted to the less than 2/1 ratio specified in the Earls et al patent with reference to multi-bed systems employing cylindrical beds. While relatively low exhaust/feed ratios are quite desirable as indicated above, those skilled in the art will appreciate that the requirements of certain RPSA applications may make it highly desirable or even essential that exhaust times of at least twice the feed time be employed. The processing cycle of Examples 3 and 4, employing a total cycle time of 2.4 seconds, with the adsorption step being 16.7% of the total cycle time, is one such application, this specific operating cycle being adapted with reference to the requirements of an aircraft breathing application of the RPSA invention. The flexibility provided by the invention with respect to the obtaining of desirably improved performance, regardless of needed variations in the exhaust and feed times employed for particular applications in conjunction with the bed configuratios based on the indicated area reduction, represents an important advance in the development of RPSA technology for practical commercial applications. Similar results have also been obtained with relaxed oxygen enrichment requirements of 90.0%. It should be noted that the comparative runs of Example 4 were carried out using a discontinuous feed to the adsorption system, i.e. the feed gas flow to the system is temporarily discontinued upon completion of the feed to each individual bed in the system. Further discussion of such discontinuity of feed to the system is provided below.

In the examples above, it will be seen that the bed configurations employed in the practice of the invention, together with desirable processing cycles that include exhaust/feed ratios departing from the teachings of the Earls et al and Jones et al patents referred to above, provide desirable improvement in the performance of the RPSA process as carried out in single bed and in multi-bed systems. Such improvements include improved product gas recovery and adsorbent productivity, as well as reduced power requirements. While it was noted above that the reduction in cross sectional area of the configured bed employed in the practice of the invention is not dependent upon a particular relationship to the length of the bed, the benefits and advantages of the invention can be additionally perceived from another viewpoint upon consideration of the relationship of the ratio of the cross sectional area reduction of the bed and the desired exhaust/feed ratio employed to the length of the adsorbent bed and to the overall total cycle time for a specific RPSA system employed for a particular gas separation application. Such factors have been found to be interrelated in a manner further distinguishing the invention from prior art RPSA processing techniques. This interrelationship has been defined in terms of a Physical
Configuration Index. i.e. P.C.I., relating to the
RPSA operations carried out in an adsorbent bed as
follows:

$$P.C.I. = \frac{L(t_e/t_f)}{Q_1/Q_2} t_t.$$

where L is the length of the adsorbent bed, in
inches; $t_e/t_f$ is the ratio of the time of
exhaust $(t_e)$ to feed $(t_f)$ time during each
processing cycle. $t_t$ is the overall total cycle
time, in seconds; and $Q_1/Q_2$ is the ratio of the
cross sectional area of the bed at the feed end
$(Q_1)$ to said area at the discharge end thereof
$(Q_2)$. When applied to the use of Vessel I, i.e. a
totally cylindrical, vertical vessel of 12" $\pm$ 0.25
height (i.e. bed length) under the processing
conditions set forth in Example 1, i.e. with an
exhaust/feed ratio of 0.83/1 and a total cycle time
of 2.7 seconds, the P.C.I. for such operation is
26.9. By contrast, the P.C.I. pertaining to the
same operating conditions carried out in the beds
configured as specified with respect to Vessels II
and III, i.e. with said 12" length, but configured
so that $Q_1/Q_2$ is 4/1 and 16/1, respectively, is
6.72 for said Vessel II embodiment and 1.68 for said
Vessel III embodiment.

With respect to the processing conditions
of Example 3, i.e. with a total cycle time of 2.4
seconds and an exhaust/feed ratio of about 2.25/1,
the P.C.I. for the totally cylindrical Vessel I is
64.8. When the same operating conditions are
carried out in beds configured in accordance with

0175804

said Vessels I and III as described above, on the other hand, said P.C.I. is 16.2 and 4.05, respectively.

It will be appreciated that, if Vessel II had been configured so as to provide an area reduction of 2/1 from the feed to the discharge end thereof, with the bed length and operating conditions remaining unchanged, the P.C.I. for embodiments would be about one-half (1/2) of the P.C.I. for the comparable Vessel I embodiments. In other embodiments of the invention it will be appreciated that, using an optimum area reduction of the bed, i.e. about 4/1, it is possible to employ a bed twice as long employed under the same operating conditions while maintaining a P.C.I. of 1/2 of that pertaining to a comparative cylindrical bed embodiment. Similarly, the total cycle time could be doubled, a longer exhaust/feed ratio could be employed as may be particularly desirable in very low total cycle time applications, or a combination of said adsorbent bed and processing conditions can be employed while maintaining a P.C.I. not exceeding about 1/2 that of the comparable cylindrical bed system.

The significance of the practice of the invention will be further appreciated from a consideration of the P.C.I. pertaining to a typical embodiment of the invention as employed in a single bed RPSA system adapted for use as a portable home oxygen concentrator as contrasted to the embodiment of the Jones et al patent, referred to above, wherein a reduction of the cross sectional area of

D-13,918

the single adsorbent bed from the feed to the discharge end thereof was by a factor of 9/1. In the example of the invention, a bed length of about 13" is conveniently employed with the area reduction from the feed to the discharge end of the bed being 5/1. The total cycle time is about 3.28 seconds, and the exhaust to feed time ratio has been optimized at about 1.5/1. By contrast, Jones et al disclosed that the exhaust/feed ratio must be in excess of 2/1, with the particular embodiment employing an exhaust/feed ratio of 6/1, together with said area reduction of 9/1 and an overall bed length of 45" as is disclosed in Col. 14 of said Jones et al patent. Under such bed configuration and processing cycle conditions, the P.C.I. for said home oxygen concentrator application is 12.8. By contrast, the P.C.I. of the said embodiment of the Jones et al patent is 375. Thus, consideration of the practice of the RPSA process from the P.C.I. viewpoint serves to highlight the advantages achievable by carrying out the RPSA process having an adsorbent bed or beds configured as disclosed and claimed herein, and employed in conjunction with the advantageous exhaust/feed ratios and overall processing conditions applicable to given applications as herein disclosed and claimed.

Those skilled in the art will appreciated that the significantly lower P.C.I. factors obtainable in the practice of the invention vis-a-vis prior art or conventional RPSA practice constitute another perspective with respect to the enhanced adsorbent productivity, product recovery

D-13,918

and other advantages made possible by the invention and disclosed above. For practical commercial embodiments of the invention, the P.C.I. will generally be less than 150 in addition to not exceeding about 1/2 of the P.C.I. for a comparable cylindrical bed system operated under the same processing conditions. The P.C.I. is preferably in the range of from about 1 to about 50, more preferably from about 2 to about 20, e.g. about 12-13. Operating within such ranges, it is possible to advantageously optimize the desirable combination of particular bed configuration and overall RPSA processing cycle conditions so as to enhance adsorbent productivity and product recovery, while achieving desirable reduction in power consumption and adsorbent inventory requirements.

It will be appreciated that various changes and modifications can be made in the details and conditions of the invention as herein desired without departing from the scope of the invention as set forth in the appended claims. Thus, the adsorbent employed may be any commercially available adsorbent capable of selectively adsorbing one or more less readily adsorbable components from a gas mixture thereof with more readily adsorbable gas components. The adsorbents mentioned in the Earls et al patent, U.S. 4,194,891 and in the Jones et al patent, U.S. 4,194,892 can readily be employed in the practice of the invention. Likewise, the invention can be applied for a variety of gas separation applications, as in conventional pressure swing adsorption technology, in such circumstances

D-13,918

0175804

where the advantages of a rapid processing cycle and high adsorbent productivity are desired. While home oxygen concentrators have been referred to herein as a highly desirable practical application of the invention, therefore, hydrogen separation and purification from gas mixtures containing CO and/or methane is one of a number of other gas separation operations to which the invention can be applied in appropriate circumstances. It should also be noted that the invention can be practiced for air separation applications wherein nitrogen is the desired product and oxygen is the more readily adsorbable component. For this purpose, particular commercially available adsorbents, e.g., 4A zeolite molecular sieve, and processing conditions would be employed such that nitrogen rather than oxygen is the less readily adsorbable component. In such air separation embodiments in which nitrogen is the less readily adsorbable component recovered as product effluent, the total operating or cycle time for each process cycle is within the overall time limitations, i.e., up to about 30 seconds, applicable to RPSA systems, with the total operating time for each cycle being preferably from about 4 to about 20 seconds. Those skilled in the art will also appreciate that the size and length of each adsorbent bed employed in the practice of the invention will vary depending on the separation to be made, the product purity requirements, the adsorbent employed, the pressure level desired and the overall limitations that may pertain to the size and length of each bed, and the size of the overall

D-13,918

system for each such separation application. In general, however, the invention is found to enable higher pressure RPSA operations to be carried out without a necessary increase in the size or length of the adsorbent beds and/or to enable the size and length of the beds to be reduced without adverse effect on performance and product stability.

In the multi-bed embodiments of the invention referred to above, the feed gas is continuously being passed to the RPSA system. Thus, upon completion of the adsorption step in one bed, the feed gas flow to that bed is terminated, and said feed gas flow to the next bed in the processing sequence is commenced. Where a large number of beds are employed, it may be desirable to pass the feed gas to more than one bed at any given time, in a predetermined overlapping cyclic processing sequence. It is also within the scope of the invention to temporarily discontinue the passing of feed gas to the adsorption system upon completion of the feed or adsorption step to an individual bed in the system. In such embodiments, which are highly desirable for particular embodiments, the time of said feed step to each bed and the time of discontinuity of feed before commencing the passing of feed gas to the next succeeding bed is maintained approximately the same throughout the processing cycle. Those skilled in the art will appreciate that various mechanical means can be devised to produce the essentially uniform feed periods and feed discontinuity periods when such discontinuity is employed in multi-bed embodiments of the invention. One very convenient and desirable means for achieving such discontinuity is by use of a rotary valve arrangement that will permit the feeding of the feed gas mixture to each bed or set of beds in proper sequence in accordance with the overall processing cycle employed in a given application. The Snyder patent, U.S. 4,272,265, discloses a rotary valve arrangement as developed for a continuous feed application of pressure swing adsorption technique for oxygen-enrichment by air separation. Such a rotary valve can be modified by making the part or inside diameter of the sleeve smaller so that an alignment of parts and an out-of-alignment condition occur in proper sequence to accomplish the feed and temporary discontinuance of feed desired in a given application.

Other mechanical features of the apparatus used to perform the process of the invention will be subject to variation, change or adjustment depending on the circumstances pertaining to a particular application. RPSA systems generally operate, in order to effectively function within the time limits of the rapid overall processing cycle involved, with no orifice, valve or other device physically restricting the flow of gas from the downstream product manifold into the adsorbent bed countercurrent to the direction of feed gas flow in the bed. In certain multi-bed embodiments, the RPSA system will be such as to enable gas to flow directly from one bed to another, as during the repressurization of the bed into which said gas is being passed, through the common product manifold joined to the discharge end of each bed. Thus, no intermediate product storage vessel or tank would be positioned directly in the flow path from one bed to another through said common product manifold. It is also within the scope of the invention, when desired, to employ such a product storage vessel in the product manifold means downstream of the adsorbent beds. Where a product storage vessel is employed in multi-bed embodiments, it is possible to position such vessel in the product manifold so that gas passing from one bed to another passes therethrough or to provide such vessel outside of the direct flow path through the product manifold from one bed to another. It should be noted that such a product storage vessel can also be employed in single bed embodiments of the invention. The single product manifold will be understood to assure that a supply of high pressure product gas will be available for countercurrent repressurization purposes during the delay period regardless of the overall processing sequence of the RPSA process or the rate at which product gas is being withdrawn from the system.

The combination of favorable exhaust/feed ratios and adsorbent bed cross sectional area reduction, as well as the overall physical configuration index based on such cross sectional area reduction, as disclosed and claimed herein constitutes a significant development leading to highly desirable improvements in the already desirable rapid pressure swing adsorption technology. By enabling product recovery at a

D-13,918

desired purity level to be enhanced and adsorbent productivity to be significantly increased, while power consumption and inventory requirements are reduced, the invention provides the basis for greater use of RPSA processing in fulfilling the needs of practical commercial applications. The greater flexibility and the size and weight advantages afforded in the practice of the RPSA process for home medical oxygen concentrators and for other medical and industrial applications represent an important advance in the application of the RSPA process to important, practical circumstances in which a genuine need exists for the convenient and ready production of oxygen or other desired product gases from air or other available feed gas mixtures.

CLAIMS

1. In a rapid pressure swing adsorption process for the selective adsorption of at least one more readily adsorbable gas component from a feed gas mixture in an adsorption system having a single adsorbent bed that undergoes a cyclic processing sequence that includes (a) feeding said gas mixture to the feed end of the bed for adsorption at high adsorption pressure, with discharge of a less readily adsorbable gas component as product effluent from the discharge end of the bed, (b) countercurrently depressurizing said bed, thereby exhausting the more readily adsorbable component from the feed end of the bed, and (c) repressurizing said bed from the lower pressure reached during countercurrent depressurization, the total cycle time being less than about 30 seconds, the improvement comprising feeding said gas mixture to said adsorbent bed configured such that the ratio of the cross sectional area thereof at the feed end to that at the discharge end of the bed is from about 2/1 to about 20/1, and employing an exhaust step time of less than twice the feed step time, whereby enhanced adsorbent productivity and product recovery can be achieved, together with desirable reduction in power consumption and adsorbent inventory requirements.

2. In a rapid pressure swing adsorption process for the selective adsorption of at least one more readily adsorbable gas component from a feed gas mixture in an adsorption system having at least two adsorbent beds, each of which undergoes a cyclic processing sequence that includes (a) feeding said gas mixture to the feed end of the bed for adsorption at high adsorption pressure, with discharge of less readily adsorbable gas component as product effluent from the discharge end of the bed, (b) countercurrently depressurizing said bed, thereby exhausting the more readily adsorbable component from the feed end of the bed, and (c) repressurizing said bed from the lower pressure reached during countercurrent-depressurization, the total cycle time being less than about 30 seconds, the improvement comprising feeding said gas mixture to said adsorbent beds configured such that the ratio of the cross sectional area thereof at the feed end of each bed to the cross sectional area at the discharge end thereof is from about 2/1 to about 20/1, whereby enhanced adsorbent productivity and product recovery can be achieved, together with desirable reduction in power consumption and adsorbent inventory requirements.

3. The process of Claim 2 and including temporarily discontinuing the feeding of said gas mixture to the adsorption system upon completion of the feed step to each bed in the system, the time of said feed step to each bed and the time of discontinuity of feed before commencing the passing of said gas mixture to the next succeeding bed being approximately the same throughout the processing cycle.

4. The process of any one of the preceding Claims in which said ratio of the cross sectional area at the feed end of the bed to said discharge end thereof is from about 3/1 to about 6/1, and preferably from about 4/1 to about 5/1.

5. The process of any one of the preceding Claims in which the exhaust/feed time ratio is from about 0.4/1 to about 1.8/1, and preferably from about 1/1 to about 1.75/1.

6. The process of any one of the preceding Claims in which said reduction in cross sectional area is by a ratio of about 5/1.

7. The process of any one of the preceding Claims in which said feed gas mixture comprises air.

8. The process of Claim 7 in which said less readily adsorbable gas component comprises oxygen.

9. The process of any one of the preceding Claims in which said exhaust/feed ratio is in the order of about 1.5/1.

10. The process of any one of the preceding Claims in which the adsorption pressure is at least about 20 psig.

11. The process of Claim 10 in which said adsorption pressure is from about 25 to about 60 psig.

12. The process of any one of the preceding Claims in which said bed is countercurrently depressurized so as to reduce the pressure at the feed end of the bed to about atmospheric pressure or a sub-atmospheric pressure during the exhaust steps.

13. The process of any one of the the preceding Claims in which said adsorption system is operated at a Physical Configuration Index, P.C.I., not exceeding about one half of the P.C.I. for a comparable cylindrical bed system of the same size operated under the same operating conditions, wherein

$$P.C.I. = \frac{L(t_e/t_f)}{Q_1/Q_2} t_t,$$

where L is the length of the adsorbent bed, in inches; $t_e/t_f$ is the ratio of the exhaust ($t_e$) to feed ($t_f$) time during each processing cycle, $t_t$ is the overall total cycle time, in seconds; and $Q_1/Q_2$ is the ratio of the cross sectional area of the bed at the feed end ($Q_1$) to said area at the discharge end thereof ($Q_2$).

14. The process of Claim 13 in which said P.C.I. is less than about 150.

15. The process of Claim 14 in which said P.C.I. is from about 1 to about 50 and preferably from about 2 to about 20.

16. The process of Claims 9 and 15 in which said P.C.I. is about 12-13.

17. The process of Claim 2 in which from 2 to 10 and preferably from 2 to 5 adsorbent beds are employed in said adsorption system.

18. The process of Claim 17 in which from 2 to 3 adsorbent beds are employed in said system.

19. The process of any one of the preceding Claims in which the total operating time for each processing cycle is from about 2 to about 10 seconds

20. The process of any one of the preceding Claims in which the processing cycle in the or each bed, respectively, comprises said feed step at high adsorption pressure, a delay step, said exhaust step and said repressurization step, with no feed gas mixture being fed to the bed and no gas being exhausted from the bed by countercurrent depressurization during said delay period, the gas pressure in the bed decreasing from the adsorption pressure as said gas travels through the bed to the discharge end thereof during said delay period.

21. The process of any one of the preceding Claims in which said repressurization step comprises a delay period in which no feed gas mixture is fed to the bed and no gas is exhausted from the bed by countercurrent depressurization during the delay period, the gas pressure rising in the bed during the delay period by partial countercurrent repressurization of the bed with product quality gas that passes from the downstream product manifold into the discharge end of the bed during the delay period.

22. The process of Claim 17 in which the exhaust/feed ratio is in excess of about 2/1.

23. The process of Claims 4, 11, 15, and 22 in which the exhaust/feed ratio is about 2.25/1.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,Y | EP-A-0 013 680  (UNION CARBIDE) *Claims* | 1 | B 01 D  53/04 C 01 B  13/02 |
| D,A | | 2-23 | |
| | --- | | |
| D,Y | GB-A-2 013 101  (BENDIX CORP.) *Page 5, lines 88-104; figure 3* | 1 | |
| | ----- | | |

**TECHNICAL FIELDS SEARCHED (Int. Cl 4)**

B 01 D  53/00

The present search report has been drawn up for all claims

| Place of search THE HAGUE | Date of completion of the search 21-01-1985 | Examiner BOGAERTS M.L.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82